# FASCICULE DE BREVET EUROPEEN

(11) **EP 2 389 076 B1**
(45) Date de publication et mention de la délivrance du brevet: **13.03.2013**
(21) Numéro de dépôt: 09745999.4
(22) Date de dépôt: 27.04.2009
(51) Int. Cl.: A23L 1/29, A23L 1/30, A23L 1/305

(54) **ALIMENT INFANTILE À BASE DE MATIÈRE GRASSE D'ORIGINE LAITIÈRE**
MILCHFETT-BABYNAHRUNG
DAIRY FAT BABY FOOD

(30) Priorité: 29.04.2008 FR 0802386
(43) Date de publication de la demande: 30.11.2011
(73) Titulaire: Groupe Lactalis, 53000 Laval (FR)
(72) Inventeur: LHELIAS, Amandine, F-35240 Retiers (FR); MORGAN, François, F-35000 Rennes (FR); KEST, Frédéric, 53800 Saint Martin Du Limet (FR); BIGOT, Jean-Jacques, F-35131 Chartres De Bretagne (FR); LE RUYET, Pascale, F-44110 Villepot (FR)
(74) Mandataire: Dupuis-Latour, Dominique
(86) Numéro de dépôt international: PCT/FR2009/050772
(87) Numéro de publication internationale: WO 2009/138680

(56) Documents cités:
- EP-A- 0 496 456
- WO-A-2006/115412
- FR-A- 2 809 595
- US-A- 5 066 500
- US-A- 5 658 768
- US-A- 5 709 888
- MENDY, F.: "Synergie et acides gras - XXIe siècle: une ère nouvelle pour les lipides", OCL, vol. 12, no. 1, 1 février 2005 (2005-02-01), pages 5-15, XP002555620,

## Description

L'invention concerne les laits infantiles premier et deuxième âge (ci-après simplement désignés "laits infantiles") sous forme liquide prête à boire ou sous forme de poudre à reconstituer, et plus particulièrement la formulation de ces laits en termes de matières grasses et de protéines.

On sait que les lipides jouent des rôles essentiels lors de la vie embryonnaire et dans les premières années de la vie : rôle structural, notamment au niveau cérébral en participant à la fabrication de la gaine de myéline des neurones, et rôle énergétique pour la croissance et le développement de l'enfant. Mendy F., OCL 2005; 12 (1): 5-15 décrit certains aspects du métabolisme des acides gras chez l'homme.

Les lipides sont donc des macronutriments, aussi vecteurs de micronutriments, essentiels au bon développement de l'enfant et plus particulièrement à son développement cérébral, et ce dès sa naissance.

Les lipides du lait maternel présentent une composition spécifique, dans la mesure où ils sont constitués de triglycérides (pour 80 %), de diglycérides, d'acides gras libres et de cholestérol. Dans les triglycérides, les acides palmitique (C16:0) et myristique (C14:0) sont placés majoritairement en position centrale (sn2).

Le lait maternel contient également des acides gras minoritaires mais essentiels pour l'enfant : ce sont les acides gras à chaîne courte, facilement métabolisés par l'organisme, ainsi que des phospholipides et autres lipides dits neuronaux.

Par ailleurs le cholestérol, présent en quantité notable dans le lait maternel (120 mg/l), joue un rôle essentiel comme composant de toutes les cellules de l'organisme et comme précurseur de nombreuses molécules ayant des rôles essentiels dans l'organisme (hormones, vitamine D, acides biliaires).

Les laits infantiles utilisés comme produits de substitution des laits maternels sont très strictement réglementés. Ils doivent notamment se conformer à la Directive 2006/141/CE de la Commission des communautés européennes en date du 22 décembre 2006 concernant les préparations pour nourrissons et les préparations de suite.

Cette réglementation établit en outre un certain nombre d'exigences en termes de composition protéique, afin que la composition en acides aminés du lait infantile se rapproche de la protéine de référence du lait maternel. L'obligation réglementaire, outre la teneur globale en protéines, implique d'atteindre au moins l'aminogramme décrit dans cette réglementation.

Les laits infantiles préparés à partir d'une ou plusieurs matières grasses exclusivement végétales présentent un certain nombre de différences par rapport au lait maternel.

En particulier, en ce qui concerne les acides gras polyinsaturés (AGPI), ces laits infantiles présentent un excès important d'AGPI n-6 (acide linoléique) et, dans une moindre mesure, d'AGPI n-3 (acide linolénique), ainsi qu'un rapport ω-6/ω-3 notablement supérieur à ce qu'il est pour le lait maternel.

Inversement, ils présentent par rapport au lait maternel une carence importante en acides gras saturés (AGS) comme les acides palmitique et myristique et en isomère conjugué de l'acide linoléique (de la famille des ω-7): l'acide ruménique. Or l'acide myristique et l'acide ruménique sont très bénéfiques pour la santé. L'acide myristique intervient en effet, à partir de l'acide alpha-linolénique, dans la fabrication endogène du DHA (acide docosahexaènoïque), qui est un acide gras essentiel de la famille des ω-3 nécessaire au cerveau et au coeur pour fonctionner de façon optimale. L'acide ruménique pourrait être aussi un élément clef de cette synthèse endogène de DHA et s'avère être un facteur de protection cardio-vasculaire et de prévention des cancers.

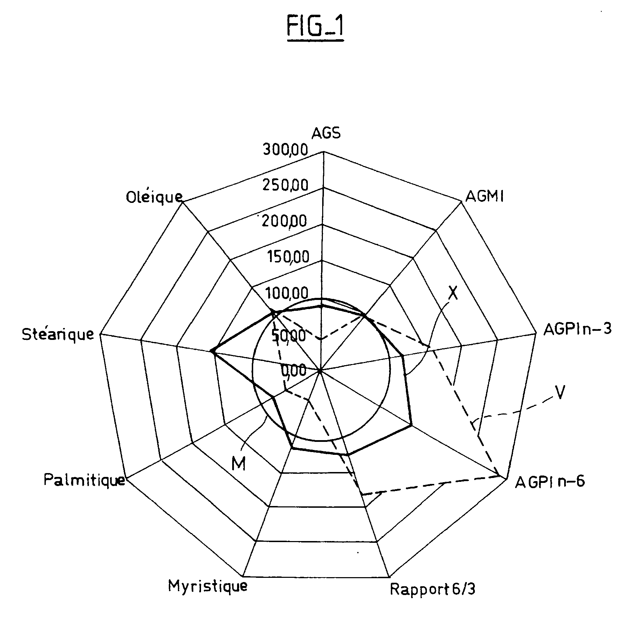

Ces différences sont schématisées sur la Figure 1 annexée, qui exprime la composition en acides gras pour différents produits, rapportés en pourcentages par rapport au lait maternel. Le lait maternel est schématisé par le cercle M illustrant la composition de référence (100 % pour chaque constituant), tandis que le tracé V décrit la composition moyenne de quelques produits couramment disponibles sur le marché, tous formulés à partir de matière grasse exclusivement végétale. Il résulte de cette comparaison que les produits actuellement disponibles ne sont proches du lait maternel qu'en ce qui concerne les acides gras mono-insaturés (AGMI) et la teneur en acide oléique.

On sait par ailleurs que les phospholipides contribuent à l'amélioration des défenses naturelles du nourrisson en permettant une meilleure maturation de la paroi digestive, en améliorant ainsi la fonction digestive et réduisant le risque de développement d'allergies alimentaires ou d'intolérance, comme dans le cas de l'intolérance au gluten.

Le cholestérol présente également une importance, en ce qu'il permet de normaliser le bilan lipidique de l'enfant dans les années ultérieures et à l'âge adulte. On a pu en effet constater que le taux de cholestérol sanguin des enfants nourris au sein était plus élevé dans les premières années de la vie que celui des enfants nourris au lait infantile composé de matières grasses végétales, cette valeur étant ensuite inversée dans les années suivantes. L'explication serait qu'une épargne de la biosynthèse dans les premières années de la vie, via l'apport de cholestérol du lait maternel, protègerait d'un taux sanguin de cholestérol trop élevé à l'âge adulte. D'autre part, en ce qui concerne la composition protéique, on constate que les formulations qui existent actuellement sur le marché, si elles atteignent au moins les valeurs minimales de l'aminogramme prescrit par la réglementation, ne tiennent pas toujours compte du fait qu'une surcharge en protéines, et *a fortiori* en acides aminés, peut également être néfaste à la santé (obésité, diabète, ...).

Pour améliorer le profil lipidique d'un aliment infantile premier ou deuxième âge de manière à présenter une composition bien plus proche du lait maternel que celle des laits couramment disponibles - ceci en restant bien entendu dans le cadre de la réglementation, très stricte, applicable à ces produits - il a été proposé, notamment par les US 5 709 888 A, US 5 066 500 A, EP 0 496 456 A1 et US 3 542 560 A, d'utiliser une source de matière grasse d'origine laitière pour l'obtention d'au moins 30 % de la fraction lipidique, et des sources de matières grasses végétales pour le reste de cette fraction lipidique.

La matière grasse végétale peut notamment être issue du colza et/ou du tournesol. La matière grasse d'origine laitière peut provenir d'une crème de lait, d'un beurre, d'un lait standardisé en matière grasse laitière, d'une matière grasse laitière anhydre et/ou d'une matière issue d'un fractionnement d'une matière grasse laitière anhydre, quelle que soit l'origine animale de cette matière grasse, qui peut provenir de vache, brebis, chèvre ou autre. Il est par ailleurs possible d'utiliser pour l'obtention de la fraction protéique une source de protéines d'origine laitière.

L'invention vise l'utilisation de ces sources de matières grasses pour la fabrication d'un aliment infantile pour nourrisson ou enfant en bas âge sous forme liquide ou solide sous forme de poudre à reconstituer, destiné à l'augmentation de la fabrication endogène du DHA et son accumulation dans les membranes, particulièrement dans le cerveau, chez le nourrisson et le jeune enfant.

L'invention prévoit d'utiliser pour l'obtention d'une fraction protéique de l'aliment infantile au moins une source de protéines d'origine laitière pouvant comprendre : un dérivé laitier issu de la phase soluble du lait, mais non issu de lactosérum acide ou de fromagerie ; un concentré d'α-lactalbumine.

Avantageusement, la fraction protéique est obtenue à partir de 36 à 68 % d'un dérivé laitier issu d'une déminéralisation sélective de la phase soluble du lait et de 32 à 64 % de protéines totales de lait, ou bien de 17 à 32 % d'un dérivé laitier issu d'une déminéralisation sélective de la phase soluble du lait, de 17 à 32 % d'un concentré d'α-lactalbumine, et de 35 à 65 % de protéines totales de lait.

La source de matière grasse d'origine laitière est de préférence utilisée pour l'obtention de 30 à 85 % de la fraction lipidique. Comme source de matière grasse végétale, il est possible d'utiliser par exemple de 0 à 70 % de matière grasse issue du colza et de 0 à 20 % de matière grasse issue du tournesol.

Quant à la source de matière grasse d'origine laitière, elle peut notamment comprendre : une crème de lait, un beurre, un lait standardisé en matière grasse laitière, une matière grasse laitière anhydre et/ou une matière issue d'un fractionnement d'une matière grasse laitière anhydre.

La fraction lipidique comprend avantageusement des phospholipides laitiers présents dans un concentré de membranes de globules gras du lait. L'aliment infantile peut notamment comprendre : au moins 2 mg, de préférence au moins 4 mg, de cholestérol pour 100 g de lait reconstitué ; au moins 104 mg, de préférence au moins 200 mg, d'acide myristique pour 100 g de lait reconstitué, de préférence avec l'acide myristique majoritairement situé en position 2 ; et/ou 10 à 250 mg, de préférence 100 à 200 mg, de phopholipides laitiers pour 100 g de lait reconstitué.

On va maintenant exposer plus en détail l'invention, en référence à la Figure unique précitée, qui est un diagramme comparatif de la composition en acides gras, par rapport au lait maternel, de laits infantiles existants courants et d'un lait utilisé par l'invention.

Comme cela a été indiqué plus haut, l'invention a pour objet l'utilisation d'une formule infantile premier et deuxième âge qui se rapproche le plus possible du lait maternel en intégrant, dans une formule très réglementée, une source de matière grasse laitière, en substitution totale ou partielle de la matière grasse d'origine végétale couramment utilisée pour la formulation de ces laits infantiles.

### Utilisation d'une source de matière grasse d'origine laitière

Le procédé de préparation du lait infantile reste classique, il n'est pas substantiellement modifié.

Ce procédé utilise, en tout ou partie, une source de matière grasse d'origine laitière, issue de lait de vache, de chèvre, de brebis, ... se présentant sous forme de crème de lait, de beurre, de matière grasse laitière anhydre (MGLA), ou d'une matière issue du fractionnement de la MGLA, comme la fraction oléique issue du fractionnement de la MGLA ou de la stéarine laitière.

Par exemple, on peut soumettre une matière grasse laitière telle que du beurre (82 % de lipides) à une fonte et une filtration pour donner une huile de beurre. Cette huile est ensuite décantée et clarifiée, puis pasteurisée et enfin déshydratée sous vide et refroidie, pour donner une MGLA constituée typiquement d'une matière grasse à 99 % de lipides provenant du beurre duquel la partie hydrique a été enlevée. En soumettant cette MGLA à une cristallisation dirigée suivie d'une séparation physique des fractions liquide et solide, par exemple par filtre-presse, il est possible d'obtenir une oléine simple (fraction liquide), ou double par réitération de cette étape de cristallisation dirigée. Des crèmes peuvent être obtenues par émulsification de la matière grasse, notamment grâce à la fonction émulsifiante propre aux protéines laitières (caséines, caséinates de sodium, de calcium ou d'autres sels, protéines de lactosérum, protéines solubles du lait).

Pour atteindre une composition se rapprochant le plus possible du lait maternel, il est avantageux de combiner matière grasse d'origine laitière et matières grasses végétales.

La partie lipidique de la formulation du lait infantile est alors par exemple composée de 30 à 100 % de matière grasse laitière. Si des matières grasses végétales sont utilisées, le complément est formé par exemple de 14 à 26 % de matière grasse issue du colza et de 10 à 20 % de matière grasse issue du tournesol.

La formule peut être également complétée par addition de phospholipides, à hauteur de 0,8 à 2,5 g/l, extraits de membrane de globules gras issus de lait de vache, chèvre, brebis, ... On sait en effet que la membrane des globules gras du lait entourant le noyau de triglycérides, appelée "membrane de globules gras laitiers" ou MFGM (*Milk Fat Globule Membrane*) est particulièrement riche en lipides polaires, essentiellement phospholipides et sphingolipides, qui présentent une activité biologique importante. On sait extraire par ultrafiltration ou microfiltration un ingrédient fortement enrichi en de tels éléments membranaires, et cet ingrédient peut être notamment utilisé dans le cadre de la présente invention pour l'enrichissement en phospholipides de la formule.

La formule de lait infantile reconstitué présente avantageusement une composition présentant les teneurs suivantes :
- cholestérol : de 3 à 19 mg pour 100 ml de lait reconstitué ;
- acides gras à chaîne courte et moyenne (jusqu'à C12) : de 4 à 25 % des AGT (acides gras totaux) ;
- acide myristique : de 4 à 15 % des AGT ;
- phospholipides : 80 à 250 mg pour 100 ml de lait reconstitué.

Le Tableau 1 ci-après donne un exemple particulier de formulation utilisée par l'invention répondant aux diverses exigences formulées plus haut, avec pour comparaison les teneurs correspondantes rencontrées dans le lait maternel.

On a par ailleurs représenté en X sur la Figure 1 le profil lipidique de la formule utilisée par l'invention, dont on voit qu'elle se rapproche bien plus du lait maternel (profil M) que les produits actuellement disponibles sur le marché, formulés à base de matières grasses exclusivement végétales (profil V).

**TABLEAU 1**

| **Profil en matière grasse** | **Lait maternel** | **Formulation utilisée par l'invention** |
|---|---|---|
| Teneur en MG (g / 100 ml reconstitués) | 3,59 | 3,5 |
| Cholestérol (mg / 100 ml reconstitués) | 15 | 5,460 |
| Phospholipides | 500 mg/jr | 1g/L |
| **En % de la Matière grasse totale :** | | |
| Total en AGS | 52 | 46,8 |
| Total en AGMI | 36 | 34,6 |
| Total en AGPI n-3 | 2 | 2,4 |
| Total en AGPI n-6 | 10 | 15,2 |
| C 4:0 | 0,19 | 2,3 |
| C 6:0 | 0,15 | 1,6 |
| C 8:0 | 0,46 | 0,9 |
| C10 caprique | 1.5 | 1,9 |
| C12 laurique | 7 | 2,2 |
| C14 myristique | 6 | 7,0 |
| C 14:1 n-5 | 0,3 | 0,9 |
| C 15 | 0,5 | 0,8 |
| C16 palmitique | 25 | 19,4 |
| C 16 :1 n-7 cis palmitoléique | 3 | 1,3 |
| C 17:0 | 0,5 | 0,5 |
| C 17:0 n-7 | 0,5 | 0,0 |
| C18 stéarique | 5 | 7,9 |
| C 18:1 trans | 4,5 | 0,0 |
| C 18 :1 n-9 cis oléique | 30 | 29,86 |
| C 18:2 trans | 1 | 0,0 |
| C 18 :2 n-6 linoléique | 16,7 | 15,03 |
| C 18 :3 n-3 linolénique | 2,4 | 2,265 |
| AL / ALA | 7 | 6,6 |

### Amélioration de la composition protéique

De façon caractéristique de l'invention, le lait infantile est formulé de manière à se rapprocher encore plus du lait maternel, sur le plan de la composition protéique, en substituant une partie de l'apport protéique par des ingrédients spécifiques.

Il est possible d'utiliser notamment à cet effet un ingrédient protéique de type *Prolacta* (marque déposée), qui est un dérivé non pas issu de lactosérum acide ou de fromagerie, mais de la phase soluble du lait, plus précisément un dérivé laitier issu d'une déminéralisation sélective de la phase soluble du lait. Cet ingrédient, commercialisé par le groupe Lactalis, est décrit notamment dans le FR 2 809 595 A1. Par exemple, les protéines du lait infantile pourront être apportées par 36 à 68 % d'un ingrédient spécifique de type *Prolacta,* et 32 à 64 % de protéines totales de lait. Ceci permet de réduire le taux protéique global du produit au plus bas des valeurs prescrites par l'aminogramme de la réglementation, en évitant une surcharge en protéines et en acides aminés, tout en apportant les acides aminés nécessaires au bon développement de l'enfant.

En variante ou en complément, les protéines peuvent être apportées par un concentré d'α-lactalbumine, obtenu par un fractionnement supplémentaire d'un ingrédient de type *Prolacta* en phase liquide, selon une technique en elle-même connue. L'utilisation d'un tel concentré permet d'améliorer encore plus l'effet du produit pour l'enfant. Ce concentré pourra compléter la formule contenant déjà l'ingrédient protéique spécifique et les protéines totales du lait, ou bien remplacer totalement l'apport en ingrédients protéiques spécifiques.

Par exemple, les protéines du produit pourront être apportées par : 17 à 32 % d'un ingrédient de type *Prolacta,* 17 à 32 % de concentré d'α-lactalbumine, et 35 à 65 % de protéines totales de lait.

Le Tableau 2 ci-dessous donne l'aminogramme obtenu avec deux exemples de formulation de ce type, avec pour comparaison les teneurs correspondantes rencontrées dans le lait maternel.

**TABLEAU 2**

| | **Exemple 1** | **Exemple 2** | Lait maternel |
|---|---|---|---|
| | 36-68 % Prolacta + 32-64 % pr. tot. lait | 17-32 % Prolacta + 17 à 32 % conc. α-lact. + 35 à 65 % pr. tot. lait | |
| | mg / 69 kcal | | |
| cys | 26,74 | 29,1 | 26,22 |
| his | 32,11 | 36,5 | 27,6 |
| ileu | 80,46 | 85,3 | 62,1 |
| leu | 163,25 | 159,3 | 114,54 |
| lys | 122,70 | 126,8 | 77,97 |
| met | 34,67 | 31,6 | 15,87 |
| phe | 63,66 | 65,4 | 57,27 |
| thr | 66,84 | 69,9 | 53,13 |
| trp | 24,62 | 27,9 | 22,08 |
| tyr | 61,47 | 62,2 | 52,44 |
| val | 83,76 | 82,9 | 60,72 |
| met + cys | 61,41 | 60,7 | 42,09 |
| tyr + phe | 125,13 | 127,6 | 109,71 |

### Bénéfices santé procurés par le lait infantile utilisé selon l'invention

De par sa composition se rapprochant du lait maternel, et contrairement aux laits entièrement formulés à partir de matières grasses végétales, le lait infantile utilisé par l'invention présente une bonne tolérance et une bonne absorption.

En particulier, l'acide palmitique, en position sn2 sur les triglycérides de la matière grasse laitière à hauteur de 40 %, est mieux absorbé, réduisant les problèmes de saponification lors de la digestion avec le calcium. Il est à noter que la digestibilité peut encore améliorée par l'utilisation des fractions oléiques de MGLA.

Comme le lait maternel, le lait infantile utilisé par l'invention contient des acides gras à chaîne courte, facilement absorbés et métabolisés par l'organisme de l'enfant.

Enfin, les phospholipides laitiers contribuent à l'intégrité de la barrière intestinale et à un transit normal.

On soulignera par ailleurs l'importance des teneurs en acide myristique, acide ruménique, en phospholipides et en cholestérol du lait infantile utilisé par l'invention.

L'acide myristique augmente, comme on l'a indiqué plus haut, la fabrication endogène de DHA et des phospholipides du cholestérol, pour un bon développement du cerveau. Des études menées chez l'homme ont en effet démontré que la consommation d'acide myristique lorsqu'il est en position sn2 sur les triglycérides (ce qui est le cas du lait infantile utilisé par l'invention) permet d'augmenter la synthèse endogène de DHA à partir de l'acide α-linolénique par action de l'acide myristique sur l'enzyme de désaturation de cette voie de synthèse. La présence d'acide myristique dans le lait infantile utilisé par l'invention permet en particulier d'activer la voie de synthèse de DHA du nourrisson, qui n'est pas toujours optimale.

Au contraire, dans un aliment infantile formulé exclusivement à partir de matières grasses végétales l'acide myristique est situé en position externe, et non en position centrale (en position 2) comme dans le cas d'une matière grasse d'origine laitière.

Une étude sur ratons montre qu'après restriction nutritionnelle pour dépléter les animaux en ω-3 et en DHA, l'alimentation apportant des lipides d'origine laitière est plus favorable à la synthèse de DHA et son accumulation dans le cerveau qu'une alimentation 100% végétale ou qu'une alimentation végétale supplémentée en DHA avec ou sans acide arachidonique, comme cela peut se pratiquer pour la préparation des aliments pour nourrissons ou enfants en bas âge.

Le Tableau 3 ci-dessous donne la concentration en DHA dans le cerveau des ratons, exprimée en % des acides gras totaux.

**TABLEAU 3**

| | DHA | DPAn-6 | AA | AA/DHA |
|---|---|---|---|---|
| Témoins déplétés | 7,53 | 7,8 | 12,6 | 1,68 |
| régime 100%végétal | 11,32 | 2,21 | 9,71 | 0,86 |
| Régime végétal avec DHA/ARA | 13,17 | 2,03 | 10,08 | 0,77 |
| régime avec 50% de matière grasse laitière | 13,72 | 2,47 | 10,25 | 0,75 |

En ce qui concerne les phospholipides, ceux-ci sont connus pour améliorer les défenses naturelles du nourrisson, notamment la résistance aux maladies hivernales, ainsi que la qualité de la barrière intestinale, qui est le seuil de nombreuses défenses immunitaires de l'organisme. Par une meilleure maturation de la paroi digestive, les phospholipides peuvent améliorer la fonction digestive et réduire le risque de développement d'allergies alimentaires.

Enfin, le cholestérol permet de normaliser le bilan lipidique des enfants dans les années suivantes et à l'âge adulte. Comme on l'a indiqué plus haut, le cholestérol permet de normaliser le bilan lipidique de l'enfant dans les années ultérieures et à l'âge adulte : le taux de cholestérol sanguin des enfants nourris au sein est plus élevé dans les premières années de la vie que celui des enfants nourris au lait infantile composé de matières grasses végétales, cette valeur étant ensuite inversée dans les années suivantes. La formulation du lait infantile utilisé par l'invention, naturellement vectrice de cholestérol, permet d'avoir un effet semblable : initialement plus élevé, le taux sanguin de cholestérol des enfants pourra par la suite devenir inférieur à celui d'enfants nourris au lait infantile composé uniquement de matières grasses végétales.

En revanche, dans un aliment infantile préparé à partir de matières grasses exclusivement végétales, la teneur en cholestérol est proche de zéro, remplacé par des phytostérols, et ce bénéfice ne peut être obtenu.

## Revendications

1. Utilisation d'une source de matière grasse d'origine laitière pour l'obtention d'au moins 30% de la fraction lipidique d'un aliment infantile pour nourrisson ou enfant en bas âge, sous forme liquide, solide ou sous forme de poudre à reconstituer, et d'une source de matière grasse végétale pour le reste de cette fraction lipidique,
pour la fabrication dudit aliment infantile pour son utilisation dans l'augmentation de la fabrication endogène du DHA et de son accumulation dans les membranes, particulièrement dans le cerveau, chez le nourrisson et le jeune enfant, la fraction protéique dudit aliment infantile comprenant au moins une source de protéines d'origine laitière comprenant un dérivé laitier issu de la phase soluble du lait mais non issu de lactosérum acide ou de fromagerie, ou un concentré d'α-lactalbumine.

2. L'utilisation de la revendication 1, comprenant l'utilisation pour l'obtention de ladite fraction protéique de : 36 à 68 % d'un dérivé laitier issu d'une déminéralisation sélective de la phase soluble du lait, et 32 à 64 % de protéines totales de lait.

3. L'utilisation de la revendication 1, comprenant l'utilisation pour l'obtention de ladite fraction protéique de : 17 à 32 % d'un dérivé laitier issu d'une déminéralisation sélective de la phase soluble du lait, 17 à 32 % d'un concentré d'α-lactalbumine, et 35 à 65 % de protéines totales de lait.

4. L'utilisation de la revendication 1, comprenant en outre l'utilisation de phospholipides laitiers présents dans un concentré de membranes de globules gras du lait, pour l'obtention de ladite fraction lipidique.

5. L'utilisation de la revendication 1, où ledit aliment infantile comprend au moins 2 mg, de préférence au moins 4 mg, de cholestérol pour 100 g de lait reconstitué.

6. L'utilisation de la revendication 1, où ledit aliment infantile comprend au moins 104 mg, de préférence au moins 200 mg, d'acide myristique pour 100 g de lait reconstitué.

7. L'utilisation de la revendication 6, où l'acide myristique est majoritairement situé en position 2.

8. L'utilisation de la revendication 1,où ledit aliment infantile comprend 10 à 250 mg, de préférence 100 à 200 mg, de phopholipides laitiers pour 100 g de lait reconstitué.

9. L'utilisation de la revendication 1, où ladite source de matière grasse d'origine laitière est utilisée pour l'obtention de 30 à 85 % de ladite fraction lipidique.

10. L'utilisation de la revendication 1, comprenant l'utilisation comme source de matière grasse végétale de 0 à 70 % de matière grasse issue du colza et de 0 à 20 % de matière grasse issue du tournesol.

11. L'utilisation de la revendication 1, où ladite source de matière grasse d'origine laitière comprend : une crème de lait, un beurre, un lait standardisé en matière grasse laitière, une matière grasse laitière anhydre et/ou une matière issue d'un fractionnement d'une matière grasse laitière anhydre.

## Claims

1. The use of a source of dairy fat for obtaining at least 30% of the lipid fraction of a baby food for breastfeeding babies or infants, in liquid or solid form or in the form of a powder to be reconstituted, and of a source of vegetable fat for the remainder of this lipid fraction,
for the production of the said baby food for its use in increasing the endogenous production of DHA and its accumulation in the membranes, particularly in the brain, in breastfeeding babies and young children, the protein fraction of the said baby food comprising at least one source of dairy proteins comprising a milk derivative derived from the soluble phase of milk but not derived from acid whey or from cheesemaking, or an α-lactalbumin concentrate.

2. The use according to Claim 1, comprising the use, for obtaining the said protein fraction, of: 36 to 68% of a milk derivative derived from a selective demineralization of the soluble phase of milk, and 32 to 64% of total milk proteins.

3. The use according to Claim 1, comprising the use, for obtaining the said protein fraction, of: 17 to 32% of a milk derivative derived from a selective demineralization of the soluble phase of milk, 17 to 32% of an α-lactalbumin concentrate, and 35 to 65% of total milk proteins.

4. The use according to Claim 1, additionally comprising the use of milk phospholipids present in a concentrate of membranes of milk fat globules, for obtaining the said lipid fraction.

5. The use according to Claim 1, wherein the said baby food comprises at least 2 mg, preferably at least 4 mg, of cholesterol per 100 g of reconstituted milk.

6. The use according to Claim 1, wherein the said baby food comprises at least 104 mg, preferably at least 200 mg, of myristic acid per 100 g of reconstituted milk.

7. The use according to Claim 6, wherein the myristic acid is predominantly in the 2 position.

8. The use according to Claim 1, wherein the said baby food comprises 10 to 250 mg, preferably 100 to 200 mg, of milk phospholipids per 100 g of reconstituted milk.

9. The use according to Claim 1, wherein the said source of dairy fat is used for obtaining from 30 to 85% of the said lipid fraction.

10. The use according to Claim 1, comprising the use, as source of vegetable fat, of 0 to 70% of fat derived from rape and 0 to 20% of fat derived from sunflower.

11. The use according to Claim 1, wherein the said source of dairy fat comprises: cream, butter, milk with a standardized dairy fat content, anhydrous dairy fat and/or a substance derived from a fractionation of an anhydrous dairy fat.

## Patentansprüche

1. Verwendung einer Quelle von Fett mit Milchursprung zum Erlangen von mindestens 30 % des Lipidanteils einer Babynahrung für einen Säugling oder ein Kleinkind in flüssiger oder fester Form oder zu rekonstituierender Pulverform und einer Quelle von Pflanzenfett für den Rest dieses Lipidanteils
zur Herstellung der Babynahrung zu dessen Verwendung bei der Steigerung der endogenen Herstellung der DHA und deren Akkumulation in den Membranen, insbesondere im Gehirn, im Säugling und Kleinkind, wobei der Proteinanteil der Babynahrung mindestens eine Quelle von Proteinen mit Milchursprung umfasst, die ein Milchderivat, das aus der löslichen Phase der Milch stammt, jedoch nicht aus saurer Molke oder der Käserei stammt, oder ein α-Lactalbumin-Konzentrat umfassen.

2. Verwendung nach Anspruch 1, die die Verwendung von Folgendem zum Erlangen des Proteinanteils umfasst: 36 bis 68 % eines Milchderivats, das aus einer selektiven Demineralisation der löslichen Phase der Milch stammt, und 32 bis 64 % der gesamten Milchproteine.

3. Verwendung nach Anspruch 1, die die Verwendung von Folgendem zum Erlangen des Proteinanteils umfasst: 17 bis 32 % eines Milchderivats, das aus einer selektiven Demineralisation der löslichen Phase der Milch stammt, 17 bis 32 % eines α-Lactalbumin-Konzentrats und 35 bis 65 % der gesamten Milchproteine.

4. Verwendung nach Anspruch 1, die außerdem die Verwendung von Milchphospholipiden, die in einem Konzentrat von Membranen der Milchfettkügelchen vorliegen, zum Erlangen des Lipidanteils umfasst.

5. Verwendung nach Anspruch 1, wobei die Babynahrung mindestens 2 mg, vorzugsweise mindestens 4 mg Cholesterin für 100 g rekonstituierte Milch umfasst.

6. Verwendung nach Anspruch 1, wobei die Babynahrung mindestens 104 mg, vorzugsweise mindestens 200 mg Myristinsäure für 100 g rekonstituierte Milch umfasst.

7. Verwendung nach Anspruch 6, wobei die Myristinsäure sich überwiegend in der 2-Stellung befindet.

8. Verwendung nach Anspruch 1, wobei die Babynahrung 10 bis 250 mg, vorzugsweise 100 bis 200 mg Milchphospholipide für 100 g rekonstituierte Milch umfasst.

9. Verwendung nach Anspruch 1, wobei die Quelle von Fett mit Milchursprung zum Erlangen von 30 bis 85 % des Lipidanteils verwendet wird.

10. Verwendung nach Anspruch 1, die die Verwendung von 0 bis 70 % Fett, das aus Raps stammt, und 0 bis 20 % Fett, das aus Sonnenblume stammt, als Quelle von Pflanzenfett umfasst.

11. Verwendung nach Anspruch 1, wobei die Quelle von Fett mit Milchursprung Folgendes umfasst: ein Rahm, eine Butter, eine standardisierte Milch aus Milchfett, ein wasserfreies Milchfett und/oder ein Fett, das aus einer Fraktionierung eines wasserfreien Milchfetts stammt.
